# EUROPÄISCHE PATENTSCHRIFT

(11) **EP 2 301 699 B1**
(45) Veröffentlichungstag und Bekanntmachung des Hinweises auf die Patenterteilung: **07.09.2016**
(21) Anmeldenummer: 10010242.5
(22) Anmeldetag: 23.09.2010
(51) Int. Cl.: B23B 31/26

(54) **Werkzeugspannvorrichtung für einen Werkzeughalter mit zentralem Verstellbolzen**
Tool chucking device for a tool holder with central adjustment bolt
Dispositif de serrage d'outil pour un support d'outil doté d'un boulon de réglage centraux

(30) Priorität: 29.09.2009 DE 102009043270
(43) Veröffentlichungstag der Anmeldung: 30.03.2011
(73) Patentinhaber: Narr Beteiligungs GmbH, 73230 Kirchheim/Teck (DE)
(72) Erfinder: Jenuwein, Franz, 73765 Neuhausen (DE)
(74) Vertreter: Ruckh, Rainer Gerhard

(56) Entgegenhaltungen:
- EP-A1- 0 787 549
- WO-A1-2010/090261
- DE-A1-102005 049 377
- JP-A- 10 118 814

## Beschreibung

Die Erfindung bezieht sich auf eine Werkzeugspannvorrichtung gemäß Anspruch 1.

Besondere Werkzeughalter beschriebener Art mit zentralem Verstellbolzen sind so beschaffen, dass durch Axialverschiebung des Verstellbolzens ein im Werkzeughalter aufgenommenes Werkzeug verstellt werden kann. Dazu greift eine Stelleinrichtung am Verstellbolzen an, die eine solche Axialverschiebung bewirkt.

Es sind Werkzeugspannvorrichtungen bekannt (DE 102 59 989 A1, DE 10 2005 049 377 A1, EP 0 787 549 A1), bei denen jeweils eine Spindel am vorderen Ende eine Werkzeughalteraufnahme aufweist, in der ein Werkzeughalter, z. B. ein HSK-Bauteil, aufgenommen wird. Im Bereich der Werkzeughalteraufnahme befindet sich eine Werkzeugspannvorrichtung mit einem axialen Zugbolzen, der an einem Kopfteil eine Kegelstumpffläche trägt, mittels der auf dem Zugbolzen ringsum verteilt sitzende Spannglieder zum Spannen eines eingesetzten Werkzeughalters radial nach außen und derart bewegbar sind, dass diese Spannglieder mit einer Kegelstumpffläche eine entsprechende innere Kegelstumpffläche des eingesetzten Werkzeughalters hintergreifen. Zum Spannen wird der Zugbolzen in eine zugeordnete Spannstellung gezogen. Zum Lösen des Werkzeughalters wird der Zugbolzen gegensinnig verschoben. Bei der Werkzeugspannvorrichtung gemäß DE 10 2005 049 377 A1, die die Merkmale des Oberbegriffs des Anspruchs 1 enthält, ist der mit dem vorderen Kopfteil versehene Zugbolzen mit einem daran anschließenden koaxialen weiteren Zugbolzen über eine Schleppzange und einen Gewindebolzen und Gewindering mit dem koaxialen ersten Zugbolzen koaxial gekuppelt, in der Weise, dass der zweite Zugbolzen über einen Ringabsatz an einem Konuskopf mit einem Innenbund der Schleppzange derart in Eingriff steht, dass bei Überführen der Werkzeugspannvorrichtung in die den Werkzeughalter spannende Spannstellung der zweite Zugbolzen über die Anlage an der Schleppzange, den Gewindebolzen und den Gewindering den ersten Zugbolzen axial mitnimmt und mit seinem Konuskopf in einen inneren Teilring der Schleppzange einfährt, wodurch die Schleppzange mit diesem Keilring gegen eine äußere Kegelstumpffläche einer spindelfesten Spannhülse radial angepresst wird. Über die radiale Presswirkung zwischen dem Konuskopf des zweiten Zugbolzens und dem Keilring der Schleppzange sowie der spindelseitigen Konusfläche tritt Selbsthemmung der Gestalt ein, dass die Schleppzange in der Spannstellung innerhalb der Spindel verkeilt ist und darüber über den Gewindebolzen und Gewindering auch der erste Zugbolzen, wobei die erzielte Spannkraft auch dann wirksam ist, wenn die auf den zweiten Zugbolzen wirkende Zugkraft nicht mehr wirksam ist.

Bei der Werkzeugspannvorrichtung der eingangs genannten Art wird mittels eines Zugbolzens ebenfalls ein Festspannen eines in die Werkzeughalteraufnahme der Spindel eingebrachten Werkzeughalters durch Spreizen einzelner Spannglieder radial nach außen bewirkt. Zusätzlich zu dieser Werkzeughalterspannung ist bei der Werkzeugspannvorrichtung eingangs genannter Art eine Vorrichtung zur Einstellung eines im Werkzeughalter aufgenommenen Werkzeuges von innen her mittels einer Stelleinrichtung mit Stellelement vorgesehen, so dass ein im Werkzeughalter aufgenommenes Werkzeug bei Bedarf verstellt werden kann. Hierzu dient ein zentraler Verstellbolzen als zusätzliches Element, der zur Einstellung eines im Werkzeughalter aufgenommenen Werkzeuges mittels einer Stelleinrichtung axial verschiebbar ist. Hierbei sieht die Erfindung vor, dass innerhalb des Zugpolzens eine Kupplungseinrichtung angeordnet ist, mittels der der Verstellbolzen mit der Verstelleinrichtung axial spielfrei kuppelbar ist und von letzterer entkuppelbar ist. Hierbei weist die Kupplungseinrichtung einzelne in Umfangsrichtung in etwa gleichen Abständen voneinander angeordnete, etwa fingerförmige Spannelemente auf, die mit einem Ende radial schwenkbeweglich an einem innerhalb des Zugbolzens axial verschiebbaren Stellelement gehalten sind und durch eine axiale Relativverschiebung zwischen Zugbolzen einerseits und Stellelement mit Verstellbolzen andererseits mit Schwenkbetätigung von außen nach innen in eine Kuppelstellung bewegbar sind und in dieser mit etwa kegelstumpfförmigen Spannflächen an einer zugeordneten Kegelstumpffläche des Verstellbolzens angreifen und den Verstellbolzen und das Stellelement axial spielfrei zusammenspannen. Durch die Anordnung innerhalb des Zugbolzens ist es möglich, diesen Zugbolzen gegen einen anderen Zugbolzen auszutauschen, der herkömmlicher Art, ohne Kupplungseinrichtung, ist. Die Werkzeugspannvorrichtung mit Kupplungseinrichtung hat den Vorteil, dass durch einfache Relativbewegung ein spielfreies zuverlässiges axiales Zusammenspannen des Verstellbolzens und der Stelleinrichtung, vorzugsweise eines axial verschiebbaren Stellelements dieser, schnell und einfach erreichbar ist. Die Werkzeugspannvorrichtung ist einfach und kostengünstig und bedingt nur einen geringen Bauraum. Vorteilhaft ist ferner, dass eine innere Durchleitung von Kühl- und/oder Schmiermittel möglich ist. Aufgrund der Kupplungseinrichtung und der dadurch ermöglichten spielfreien axialen Kupplung des Verstellbolzens mit der Stelleinrichtung ist gewährleistet, dass eine vorgegebene Axialverschiebung des Verstellbolzens eine genaue, vorgegebene Einstellung eines Werkzeuges im Werkzeughalter zur Folge hat. Eine derartige Einstellung kann daher mit großer Genauigkeit reproduzierbar erfolgen.

Weitere besondere Erfindungsmerkmale und Ausgestaltungen sind in den Unteransprüchen enthalten. Der vollständige Wortlaut dieser ist vorstehend allein zur Vermeidung unnötiger Wiederholungen nicht wiedergegeben.

Weitere Einzelheiten und Vorteile der Erfindung ergeben sich aus der nachfolgenden Beschreibung.

Die Erfindung ist nachfolgend anhand eines in den Zeichnungen gezeigten Ausführungsbeispieles näher erläutert. Es zeigen:
- Fig. 1: einen schematischen axialen Längsschnitt eines Teils einer Werkzeugspannvorrichtung für einen Werkzeughalter bei nicht gekuppelter Stellung einer Kupplungseinrichtung, in vereinfachter Darstellung,
- Fig. 2: einen schematischen axialen Längsschnitt eines Teiles der Werkzeugspannvorrichtung mit Kupplungseinrichtung gemäß Fig. 1 in größerem Meßstab, wobei unterhalb der Längsmittelachse die Kupplungseinrichtung in ihrer Kuppelstellung und oberhalb in ihrer entkuppelten-Stellung dargestellt ist.

In den Zeichnungen ist schematisch eine Werkzeugspannvorrichtung 10 gezeigt, die zur Aufnahme und zum Spannen eines nur zum Teil und nur schematisch dargestellten Werkzeughalters 11 vorgesehen ist. Der Werkzeughalter 11 weist ein HSK-Bauteil 12 mit einem zentralen Verstellbolzen 13 auf, der zur Einstellung eines im Werkzeughalter 11 aufgenommenen, nicht gezeigten Werkzeuges von innen her mittels einer nicht gezeigten Stelleinrichtung, die an einem Stellelement 14 angreift, axial verschiebbar ist.

Die Werkzeugspannvorrichtung 10 weist einen axialen Zugbolzen 15 zum Betätigen einzelner Spannglieder 16 innerhalb einer Werkzeughalteraufnahme 17 einer Spindel 18 auf. Ein derartiges Spannsystem ist z. B. bekannt aus DE 102 59 989 A1 und bedarf hier keiner weiteren eingehenden Beschreibung.

Der Zugbolzen 15 hat einen in den Zeichnungen links gezeigten Kopfteil 19 für die Betätigung der einzelnen Spannglieder 16. Im Inneren am gegenüberliegenden, in den Zeichnungen rechten Ende des Zugbolzens 15 ist eine Kupplungseinrichtung 20 enthalten, die mehrere Aufgaben erfüllt. Die Kupplungseinrichtung 20 dient im einzelnen zum Ergreifen des Verstellbolzens 13 am in den Zeichnungen rechten Endbereich, ferner zum axialen Zusammenspannen und Zusammenhalten des Verstellbolzens 13 und des Stellelements 14 zu einer axial verschiebbaren Einheit und zum Ausgleich jedweden Spiels zwischen dem Verstellbolzen 13 und dem Stellelement 14. Mittels der Kupplungseinrichtung 20 ist der Verstellbolzen 13 mit der Stelleinrichtung, und zwar dem davon gezeigten Stellelement 14, axial spielfrei kuppelbar und von letzterem entkuppelbar.

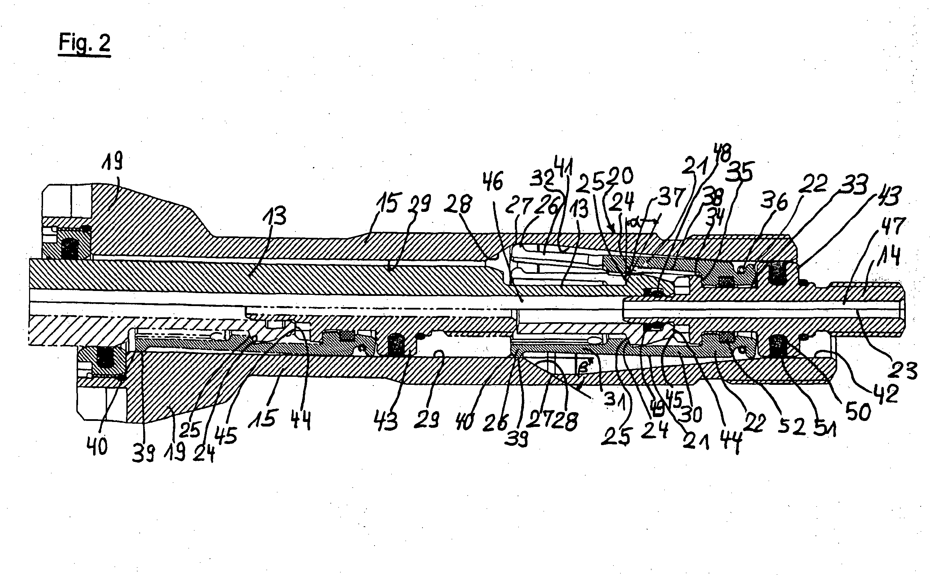

Diese Kupplungseinrichtung 20 weist einzelne in Umfangsrichtung in etwa gleich großen Abständen voneinander angeordnete Spannelemente 21 auf, die mit einem in den Zeichnungen rechts befindlichen Ende 22 radial schwenkbeweglich an dem innerhalb des Zugbolzens 15 axial verschieblichen Stellelement 14 gehalten sind. Bei einer Schwenkbetätigung der Spannelemente 21 aufgrund einer axialen Relativverschiebung zwischen dem Zugbolzen 15 und dem Stellelement 14 radial von außen nach innen in eine in Fig. 2 unterhalb der Längsmittelachse 23 gezeigte Kuppelstellung greifen die Spannelemente 21 mit etwa kegelstumpfförmigen Spannflächen 24 an einer zugeordneten Kegelstumpffläche 25 des Verstellbolzens 13 an und spannen den Verstellbolzen 13 und das Stellelement 14 axial zusammen. Die Kegelstumpffläche 25 des Verstellbolzens 13 und die etwa kegelstumpfförmigen Spannflächen 24 der einzelnen Spannelemente 21 verjüngen sich in der Axialrichtung, die dem Stellelement 14 abgewandt ist und somit in den Zeichnungen nach links weist.

Die Spannelemente 21 liegen mit den dem Stellelement 14 abgewandten axialen Enden 26 an inneren Steuerflächen 27, 28 und 29 des Zugbolzens 15 je nach Position radial von innen nach außen an. Sie sind aufgrund einer axialen Relativverschiebung zwischen dem Zugbolzen 15 und dem Stellelement 14 radial nach innen in die Kuppelstellung, Fig. 2 unterhalb der Längsmittelachse 23, schwenkbar.

Die Spannelemente 21 weisen einen ersten axialen Längenabschnitt 30 auf, der sich zwischen der Schwenklagerstelle des Endes 22 und den etwa kegelstumpfförmigen Spannflächen 24 erstreckt. Ferner weisen die Spannelemente 21 einen sich axial anschließenden zweiten axialen Längenabschnitt 31 auf, der sich axial zwischen den etwa kegelstumpfförmigen Spannflächen 24 und dem Ende 26 erstreckt, das mit den Steuerflächen 27 bis 29 des Zugbolzens 15 zusammenwirkt. Der zweite Längenabschnitt 31 ist zumindest im wesentlichen so lang bemessen wie der erste Längenabschnitt 30. Beide Längenabschnitte 30, 31 sind von wesentlicher Längserstreckung in Axialrichtung. Die Spannelemente 21 sind etwa fingerförmig ausgebildet. Dabei sind die Spannelemente 21 auf dem zweiten axialen Längenabschnitt 31 stärker federnd als auf dem ersten Längenabschnitt 30. Dies ist z. B. in einfacher Weise dadurch erreicht, dass jedes Spannelement 21 auf dem Bereich des zweiten Längenabschnitts 31 mittels eines Axialschlitzes 32 in zwei etwa parallele Einzelzungen geteilt ist.

Im Bereich des in den Zeichnungen rechten Endes 22 sind die Spannelemente 21 in einer Ringnut 33 des Stellelement 14 aufgenommen und dort mit einer Ringfläche 34 an einer Nutflanke 35 der Ringnut 33 axial abgestützt. An diesem Ende 22 sind die einzelnen Spannelemente 21 von einem federnd aufweitbaren Ring 36, z. B. einem Federring, umfasst und in der Ringnut 33 zusammengehalten. Die einzelnen Spannelemente 21 und das Stellelement 14 sind außen vom Zugbolzen 15 umfasst.

Die etwa kegelstumpfförmigen Spannflächen 24 der Spannelemente 21 gehen über eine sich daran anschließende Ringeintiefung 37 über in eine innere Geradfläche 38. An dem dem Stellelement 14 abgewandten Ende 26 weisen die einzelnen Spannelemente 21 jeweils eine äußere Zylinderfläche 39 auf, an die sich eine äußere vordere Kegelstumpffläche 40 anschließt.

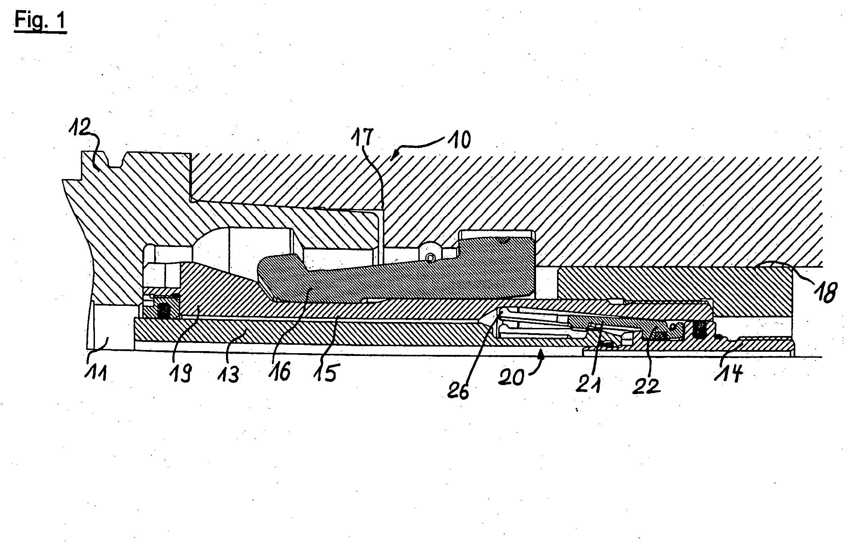

Die inneren Steuerflächen des Zugbolzens 15 weisen zunächst eine Kegelstumpffläche 28 auf, die sich in der Richtung, die dem Stellelement 14 abgewandt ist, verjüngt. Diese Steuerfläche 28 in Form der Kegelstumpffläche dient dazu, die Spannelemente 21 von der entkuppelten Stellung, die oberhalb der Längsmittelachse 23 in Fig. 1 gezeigt ist, durch axiale Relativverschiebung in die Kuppelstellung zu überführen, die in Fig. 2 unterhalb der Längsmittelachse 23 gezeigt ist. Bei einer Relativverschiebung zwischen dem Zugbolzen 15 und dem Stellelement 14 mit axial anliegendem Verstellbolzen 13 und somit beim Überführen in die Kuppelstellung sind die Spannelemente 21 mit ihren freien Enden 26, und zwar mit der Kegelstumpffläche 40, entlang der Steuerfläche 28 in Form der Kegelstumpffläche verschiebbar, soweit, bis die Spannelemente 21 in die in Fig. 2 unterhalb der Längsmittelachse 23 gezeigte Kuppelstellung geschwenkt sind, in der nun die Enden 26 der Spannelemente 21 mit der äußeren Zylinderfläche 39 radial von innen her an der als Zylinderfläche ausgebildeten Steuerfläche 29 des Zugbolzens 15 anliegen und dadurch in dieser Kuppelstellung gehalten sind, die bei einer axialen Relativverschiebung zwischen dem Zugbolzen 15 einerseits und der aus dem Stellelement 14, dem Verstellbolzen 13 und den Spannelementen 21 bestehenden Einheit andererseits in Fig. 2 nach links beibehalten wird.

Der Neigungswinkel der etwa kegelstumpfförmigen Spannflächen 24 der Spannelemente 21 und der zugeordneten Kegelstumpffläche 25 des Verstellbolzens 13 kann etwa 25° betragen und ist in Fig. 2 mit α bezeichnet. Es versteht sich, dass bei einem anderen, nicht gezeigten Ausführungsbeispiel auch ein davon abweichender Neigungswinkel gewählt werden kann, der den Erfordernissen gerecht wird. Der Neigungswinkel β der als Kegelstumpffläche ausgebildeten Steuerfläche 28 kann mit Vorteil etwa 30° betragen.

Insbesondere aus Fig. 2 wird deutlich, dass die als Kegelstumpffläche ausgebildete Steuerfläche 28 axial in Richtung zum Stellelement 14 über eine sich anschließende, als Zylinderfläche ausgebildete Steuerfläche 27 in eine schwach kegelstumpfförmige Übergangsfläche 41 übergeht, die ihrerseits in eine endseitige Zylinderfläche 42 übergeht, deren Innendurchmesser etwa dem Außendurchmesser des Stellelements 14, und zwar eines im Durchmesser vergrößerten Ringes 43 dieses, entspricht. Der Ring 43 ist ähnlich einem Kolben gestaltet und dient der Zentrierung und Führung des Stellelements 14. Die Steuerfläche 29 des Zugbolzens 15 ist als innere Zylinderfläche ausgebildet, die eine wesentliche axiale Länge aufweist und beim gezeigten Ausführungsbeispiel sich ausgehend von der Kegelstumpffläche 28 in den Zeichnungen nach links etwa bis zum Ende des Kopfteils 19 erstreckt. Diese Zylinderfläche 29 ist als Verlängerung der Zylinderfläche 42 am in den Zeichnungen rechten Ende anzusehen, wobei beide den gleichen Innendurchmesser aufweisen können. Die Zylinderfläche 29 bildet eine Gleit- und Führungsfläche für die Spannelemente 21 im Bereich ihres freien Endes 26, insbesondere der dortigen äußeren Zylinderfläche 39, und ferner für das Stellelement 14, insbesondere dessen Ring 43.

Der Verstellbolzen 13 und das Stellelement 14 weisen jeweils ebenflächige, aneinander anliegende und in der Kuppelstellung zusammengespannte Stirnflächen 44 bzw. 45 auf. Der Verstellbolzen 13 und das Stellelement 14 enthalten im Inneren jeweils einen durchgängigen Kanal 46 bzw. 47 zum Hindurchleiten von Kühl- und/oder Schmiermittel. Zwischen dem in den Zeichnungen rechten Ende des Verstellbolzens 13 und dem in diesen axial eingreifenden zylindrischen Endstück des Stellelements 14 ist ein Dichtungsring 48 und mindestens ein Stützring 49 angeordnet, die im Verstellbolzen 13 aufgenommen sind. Dadurch sind die Kanäle 46, 47 gegeneinander abgedichtet. Das Stellelement 14 weist im Bereich des Ringes 43 einen Dichtungsring 50 und Gleitring 51 auf. Im Bereich zwischen den Enden 22 der Spannelemente 21 und der Außenfläche des Stellelements 14 ist ein Gummisegmentring 52 vorgesehen.

Der Zugbolzen 15 und die Spannglieder 16 sind in der Spindel 18 enthalten und auswechselbare Bestandteile dieser.

Ein Werkzeughalter 11 mit HSK-Bauteil 12 und Verstellbolzen 13 wird in das in den Zeichnungen linke Ende eingesetzt, wobei der Verstellbolzen 13 soweit eingeschoben wird, dass dieser mit dem verdickten rechten Ende und der dortigen Stirnfläche 44 axial an der Stirnfläche 45 des Stellelements 14 anschlägt. Die Kupplungseinrichtung 20 befindet sich dabei in der entkuppelten Stellung, die in Fig. 2 oberhalb der Längsmittelachse 23 gezeigt ist. Dabei befinden sich die Spannelemente 21 in der radial nach außen geschwenkten Position. In dieser entkuppelten Stellung sind die etwa kegelförmigen Spannflächen 24 der Spannelemente 21 noch nicht in Eingriff mit der Kegelstumpffläche 25 des Verstellbolzens 13. Die Kupplungseinrichtung 20 wird ausgehend davon in die Kuppelstellung überführt, die in Fig. 2 unterhalb der Längsmittelachse 23 gezeigt ist. Diese wird dadurch erreicht, dass eine axiale Relativverschiebung zwischen dem Zugbolzen 15 einerseits und dem Stellelement 14 und axial daran anliegenden Verstellbolzen 13 sowie den einzelnen Spannelementen 21 andererseits erfolgt. Bei dieser axialen Relativverschiebung gleiten die einzelnen Spannelemente 21 mit ihrer Kegelstumpffläche 40 am Ende 26 auf der Kegelstumpffläche 28 des Zugbolzens 15. Dadurch werden die Spannelemente 21 mit den Enden 22 radial nach innen gezwungen, wobei eine Schwenkbewegung der Spannelemente 21 um den Bereich der Enden 22 geschieht, derart, dass die kegelstumpfförmigen Spannflächen 24 in Eingriff mit der Kegelstumpffläche 25 gelangen. Aufgrund des Kegelwinkels ergibt sich dabei eine Axialkomponente einer Kraft, die dazu führt, dass der Verstellbolzen 13 und das Stellelement 14 im Bereich der Stirnflächen 44, 45 axial spielfrei zusammengespannt werden und somit praktisch eine Verschiebeeinheit darstellen. Diese Verschiebeeinheit ist mitsamt den Spannelementen 21 anschließend zum Zwecke der Axialverstellung des Verstellbolzens 13 zur Einstellung eines im Werkzeughalter 11 aufgenommenen, nicht gezeigten Werkzeuges den Vorgaben entsprechend axial verschiebbar mittels einer nicht gezeigten Stelleinrichtung, die am Stellelement 14 angreift. Dazu steht ein axialer Verstellweg zur Verfügung, der in Fig. 2 mit X angedeutet ist und über die axiale Länge der Zylinderfläche 29 reicht. Bei dieser Axialverschiebung der beschriebenen Einheit gleiten die Spannelemente 21 mit ihren Enden 26, insbesondere den dortigen Zylinderflächen 39, entlang der Zylinderfläche 29 des Zugbolzens 15 mit einhergehender Zentrierung und Führung. Ferner gleitet das Stellelement 14 mit seinem Ring 43 entlang der Zylinderfläche 29, wodurch ebenfalls eine Zentrierung und Führung erreicht ist. Zum Überführen der Kupplungseinrichtung 20 in die entkuppelte Stellung erfolgt eine axiale Relativverschiebung zwischen dem Zugbolzen 15 einerseits und der Einheit, bestehend aus Stellelement 14, Verstellbolzen 13 und Spannelementen 23 andererseits derart und soweit, bis das Ende des Verstellweges X in Fig. 1 erreicht ist und die Spannelemente 21 mit ihren Enden 22 von der Zylinderfläche 29 übergehen in die Kegelstumpffläche 28. Aufgrund des Ringes 36 werden dabei die einzelnen Spannelemente 21 nach außen gespreizt, wobei die kegelstumpfförmigen Spannflächen 24 letztlich ausser Eingriff mit der Kegelstumpffläche 25 des Verstellbolzens 13 gelangen, der damit z. B. zum Entnehmen des HSK-Bauteils 12 mit Verstellbolzen 13 frei ist.

Die Werkzeugspannvorrichtung 10 mit Kupplungseinrichtung 20 hat den Vorteil, dass durch einfache axiale Relativbewegung ein spielfreies zuverlässiges axiales Zusammenspannen des Verstellbolzens 13 und des Stellelements 14 schnell und einfach erreichbar ist. Somit ist in einfacher Weise innerhalb des Zugbolzens 15 eine entsprechende Kupplungseinrichtung 20 zum Ergreifen und axialen Festspannen des Verstellbolzens 13 geschaffen. Die Werkzeugspannvorrichtung 10 ist einfach und kostengünstig und bedingt vor allem einen nur geringen Bauraum. Der Zugbolzen 15 mit enthaltenem Stellelement 14 und daran gehaltenen Spannelementen 21 kann bei vorhandener Werkzeugspannvorrichtung gegen einen solchen Zugbolzen ausgetauscht werden, der herkömmlicher Art, ohne Kupplungseinrichtung 20, ist. Vorteilhaft ist ferner, dass durch die inneren Kanäle 46, 47 und Abdichtung dieser eine innere Durchleitung von Kühl- und/oder Schmiermittel möglich ist, und dies z. B. mit hohem Druck, der in der Größenordnung bis etwa 70 bar beispielsweise liegen kann.

## Patentansprüche

1. Werkzeugspannvorrichtung für einen Werkzeughalter (11) mit zentralem Verstellbolzen (13), der zur Einstellung eines im Werkzeughalter (11) aufgenommenen Werkzeuges mittels einer Stelleinrichtung axial verschiebbar ist, mit einem axialen Zugbolzen (15) zum Betätigen einzelner Spannglieder (16) innerhalb einer Werkzeughalteraufnahme (17) einer Spindel (18), wobei
der Zugbolzen (15) eine Kupplungseinrichtung (20) enthält, mittels der der Verstellbolzen (13) mit der Stelleinrichtung axial spielfrei kuppelbar ist und von letzterer entkuppelbar ist, und dass die Kupplungseinrichtung (20) einzelne in Umfangsrichtung in etwa gleichen Abständen voneinander angeordnete, etwa fingerförmige Spannelemente (21) aufweist, **dadurch gekennzeichnet, dass** Spannelemente (21), die mit einem Ende (22) radial schwenkbeweglich an einem innerhalb des Zugbolzens (15) axial verschiebbaren Stellelement (14) gehalten sind und aufgrund einer axialen Relativverschiebung zwischen Zugbolzen (15) und Stellelement (14) mit Verstellbolzen (13) und bei Schwenkbetätigung von außen nach innen in eine Kuppelstellung mit etwa kegelstumpfförmigen Spannflächen (24) an einer zugeordneten Kegelstumpffläche (25) des
Verstellbolzens (13) angreifen und den Verstellbolzen (13) und das Stellelement (14) axial zusammenspannen.

2. Werkzeugspannvorrichtung nach Anspruch 1,
**dadurch gekennzeichnet,**
**dass** die Kegelstumpffläche (25) des Verstellbolzens (13) und die etwa kegelstumpfförmigen Spannflächen (24) der Spannelemente (21) sich in der Axialrichtung verjüngen, die dem Stellelement (14) abgewandt ist.

3. Werkzeugspannvorrichtung nach Anspruch 1 oder 2,
**dadurch gekennzeichnet,**
**dass** die Spannelemente (21) mit den dem Stellelement (14) abgewandten axialen Enden (26) an inneren Steuerflächen (27, 28, 29) des Zugbolzens (15) radial von innen nach außen anliegen können und aufgrund einer axialen Relatiwerschiebung zwischen Zugbolzen (15) und Stellelement (14) mit Verstellbolzen (13) radial nach innen in die Kuppelstellung schwenkbar sind.

4. Werkzeugspannvorrichtung nach einem der Ansprüche 1 bis 3,
**dadurch gekennzeichnet,**
**dass** die Spannelemente (21) einen ersten axialen Längenabschnitt (30), der sich zwischen der Schwenklagerstelle der Enden (22) und den etwa kegelstumpfförmigen Spannflächen (24) erstreckt, und einen sich axial anschließenden zweiten axialen Längenabschnitt (31) aufweisen, der sich axial zwischen den etwa kegelstumpfförmigen Spannflächen (24) und dem Ende (26) erstreckt, das mit den Steuerflächen (27, 28, 29) des Zugbolzens (15) zusammenwirkt.

5. Werkzeugspannvorrichtung nach Anspruch 4,
**dadurch gekennzeichnet,**
**dass** der zweite Längenabschnitt (31) zumindest im Wesentlichen so lang bemessen ist wie der erste Längenabschnitt (30), und vorzugsweise, dass
die Spannelemente (21) auf dem zweiten Längenabschnitt (31) stärker federnd sind als auf dem ersten Längenabschnitt (30).

6. Werkzeugspannvorrichtung nach Anspruch 4 oder 5,
**dadurch gekennzeichnet,**
**dass** jedes Spannelement (21) im Bereich des zweiten Längenabschnitts (31) mittels eines Axialschlitzes (32) in zwei etwa parallele Einzelzungen geteilt ist.

7. Werkzeugspannvorrichtung nach einem der Ansprüche 1 bis 6,
**dadurch gekennzeichnet,**
**dass** die Spannelemente (21) mit dem einen Ende (22) in einer Ringnut (33) des Stellelements (14) aufgenommen sind und dort mit einer Ringfläche (34) an einer Nutflanke (35) der Ringnut (33) axial abgestützt sind, und vorzugsweise, dass die Spannelemente (21) an ihrem Ende (22) von einem federnd aufweitbaren Ring (36) umfasst und in der Ringnut (33) zusammengehalten sind, und vorzugsweise, dass die Spannelemente (21) und das Stellelement (14) außen vom Zugbolzen (15) umfasst sind.

8. Werkzeugspannvorrichtung nach einem der Ansprüche 1 bis 7,
**dadurch gekennzeichnet,**
**dass** der Neigungswinkel α der etwa kegelstumpfförmigen Spannflächen (24) der Spannelemente (21) und der zugeordneten Kegelstumpffläche (25) des Verstellbolzens (13) etwa 25° beträgt.

9. Werkzeugspannvorrichtung nach einem der Ansprüche 1 bis 8,
**dadurch gekennzeichnet,**
**dass** die etwa kegelstumpfförmigen Spannflächen (24) der Spannelemente (21) über eine sich anschließende Ringeintiefung (37) in eine innere Geradfläche (38) übergehen.

10. Werkzeugspannvorrichtung nach einem der Ansprüche 1 bis 9,
**dadurch gekennzeichnet,**
**dass** die Spannelemente (21) am dem Stellelement (14) abgewandten Ende (26) eine äußere Zylinderfläche (39) aufweisen, und vorzugsweise, dass die Spannelemente (21) am dem Stellelement (14) abgewandten Ende (26) eine äußere vordere Kegelstumpffläche (40) aufweisen, und vorzugsweise, dass die Kegelstumpffläche (40) sich axial an die Zylinderfläche (39) anschließt.

11. Werkzeugspannvorrichtung nach einem der Ansprüche 3 bis 10,
**dadurch gekennzeichnet,**
**dass** die inneren Steuerflächen des Zugbolzens (15) eine sich in der Richtung, die dem Stellelement (14) abgewandt ist, verjüngende Kegelstumpffläche (28) aufweisen, entlang der die Spannelemente (21) beim Überführen in die Kuppelstellung durch axiale Relativverschiebung zwischen dem Zugbolzen (15) und dem Stellelement (14) mit Verstellbolzen (13) mit ihren freien Enden (26), insbesondere der vorderen Kegelstumpffläche (40) dieser, verschiebbar und in die Kuppelstellung schwenkbar sind, und vorzugsweise, dass der Neigungswinkel β der Kegelstumpffläche (28) des Zugbolzens (15) etwa 30° beträgt.

12. Werkzeugspannvorrichtung nach Anspruch 11,
**dadurch gekennzeichnet,**
**dass** die Kegelstumpffläche (28) axial in Richtung zum Stellelement (14) über eine sich anschließende Zylinderfläche (27) in eine Übergangsfläche (41), die z. B. schwach kegelstumpfförmig ist, übergeht und letztere in eine endseitige Zylinderfläche (42) übergeht, deren innerer Durchmesser etwa dem Außendurchmesser des Stellelements (14, 43) entspricht, und vorzugsweise, dass die inneren Steuerflächen des Zugbolzens (15) eine innere Zylinderfläche (29) wesentlicher axialer Länge aufweisen, die sich in dem Stellelement (14) abgewandter Richtung an die Kegelstumpffläche (28) des Zugbolzens (15) axial anschließt und eine Gleit- und Führungsfläche für
die Spannelemente (21) im Bereich ihres freien Endes (26), insbesondere der äußeren Zylinderfläche (39), und/oder für das Stellelement (14), insbesondere einen radial überstehenden Ring (43) dieses, bildet, und vorzugsweise, dass der Innendurchmesser der inneren Zylinderfläche (29) des Zugbolzens (15) demjenigen der endseitigen Zylinderfläche (42) entspricht.

13. Werkzeugspannvorrichtung nach einem der Ansprüche 1 bis 12,
**dadurch gekennzeichnet,**
**dass** der Verstellbolzen (13) und das Stellelement (14) jeweils ebenflächige aneinander anliegende Stirnflächen (44,45) aufweisen.

14. Werkzeugspannvorrichtung nach einem der Ansprüche 1 bis 13,
**dadurch gekennzeichnet,**
**dass** der Verstellbolzen (13) und das Stellelement (14) im Inneren jeweils einen durchgängigen Kanal (46, 47) zum Hindurchleiten von Kühl- und/oder Schmiermittel enthalten und in Bezug zueinander abgedichtet sind.

## Claims

1. Tool chucking device for a tool holder (11) with a central adjusting bolt (13), which is axially displaceable by means of a setting device for setting a tool received in the tool holder (11), with an axial draw pin (15) for actuating individual clamping elements (16) within a tool holder mount (17) of a spindle (18), wherein the draw pin (15) includes a coupling device (20), by means of which the adjusting bolt (13) can be coupled with the setting device free of axial play and can be uncoupled from the latter, and the coupling device (20) comprises individual approximately finger-shaped clamping elements (21) arranged at approximately the same spacings from one another in circumferential direction, **characterised in that** the clamping elements (21) are held by one end (22) at a setting element (14), which is axially displaceable within the draw pin (15), to be radially pivotably movable and by way of an axial relative displacement between the draw pin(15) and the setting element (14) by the adjusting bolt (13) and on pivot actuation from outwardly in inward direction into a coupling setting engage, by approximately frusto-conical clamping surfaces (24), an associated frustoconical surface (25) of the adjusting bolt (13) and axially clamp together the adjusting bolt (13) and the setting element (14).

2. Tool clamping device according to claim 1, **characterised in that** the frusto-conical surface (25) of the adjusting bolt (13) and the approximately frusto-conical clamping surfaces (24) of the clamping elements (21) taper in the axial direction away from the setting element (14).

3. Tool clamping device according to claim 1 or 2, **characterised in that** the clamping elements (21) can bear by the axial ends (26) remote from the setting element (14) against inner control surfaces (27, 28, 29) of the draw pin (15) radially from within in outward direction and by way of an axial relative displacement between the draw pin (15) and the setting element (14) by the adjusting bolt (13) are radially inwardly pivotable into the coupling setting.

4. Tool clamping device according to any one of claims 1 to 3, **characterised in that** the clamping elements (21) have a first axial length section (30), which extends between the pivot bearing point of the ends (22) and the approximately frusto-conical clamping surfaces (24), and an axially adjoining second axial length section (31), which extends axially between the approximately frusto-conical clamping surfaces (24) and the end (26) which cooperates with the control surfaces (27, 28, 29) of the draw pin (15).

5. Tool clamping device according to claim 4, **characterised in that** the second length section (31) is dimensioned to be at least substantially of the same length as the first length section (30) and preferably that the clamping elements (21) on the second length section (31) are more strongly resilient than on the first length section (30).

6. Tool clamping device according to claim 4 or 5, **characterised in that** each clamping element (21) is divided in the region of the second length section (31) into two approximately parallel individual tongues by means of an axial slot (32).

7. Tool clamping device according to any one of claims 1 to 6, **characterised in that** clamping elements (21) are received by one end (22) in an annular groove (33) of the setting element (14) and are axially supported there by an annular surface (34) at a groove flank (35) of the annular groove (33) and preferably that the clamping elements (21) are surrounded at the end (22) thereof by a resiliently expandable ring (36) and are held together in the annular groove (33) and preferably that the clamping elements (21) and the setting element (14) are externally surrounded by the draw pin (15).

8. Tool clamping device according to any one of claims 1 to 7, **characterised in that** the angle α of inclination of the approximately frusto-conical clamping surfaces (24) of the clamping elements (21) and the associated frusto-conical surface (25) of the adjusting bolt (13) is approximately 25°.

9. Tool clamping device according to any one of claims 1 to 8, **characterised in that** the approximately frusto-conical clamping surfaces (24) of the clamping elements (21) go over into an inner straight surface (38) by way of an adjoining annular recess (37).

10. Tool clamping device according to any one of claims 1 to 9, **characterised in that** the clamping elements (21) have an outer cylinder surface (39) at the end (26) remote from the setting element (14) and preferably that the clamping elements (21) have an outer, front frusto-conical surface (40) at the end (26) remote from the setting element (14) and preferably that the frusto-conical surface (40) axially adjoins the cylinder surface (39).

11. Tool clamping device according to any one of claims 3 to 10, **characterised in that** the inner control surfaces of the draw pin (15) have a frusto-conical surface (28), which tapers in the direction away from the setting element (14) and along which the clamping elements (21) are displaceable by the free ends (26) thereof, particularly the front frusto-conical surface (40) of these, on transfer to the coupling setting by axial relative displacement between the draw pin (15) and the setting element (14) by the adjusting bolt (13) and are pivotable in the coupling setting and preferably that the angle β of inclination of the frusto-conical surface (28) of the tie bolt (15) is approximately 30°.

12. Tool clamping device according to claim 11, **characterised in that** the frusto-conical surface (28) goes over axially in direction towards the setting element (14) via an adjoining cylinder surface (27) into a transition surface (41), which is, for example, of shallow frusto-conical form, and the latter goes over into an end cylinder surface (42), the inner diameter of which approximately corresponds with the outer diameter of the setting element (14, 43), and preferably that the inner control surfaces of the draw pin (15) have an inner cylinder surface (29) of substantial axial length, which axially adjoins the frusto-conical surface (28) of the draw pin (15) in a direction away from the setting element (14) and forms a sliding and guide surface for the clamping elements (21) in the region of the free end (26) thereof, particularly the outer cylinder surface (39), and/or for the setting element (14), in particular a radially protruding ring (43) thereof, and preferably that the inner diameter of the inner cylinder surface (29) of the draw pin (15) corresponds with that of the end cylinder surface (42).

13. Tool clamping device according to any one of claims 1 to 12, **characterised in that** the adjusting bolt (13) and the setting element (14) each have end surfaces (44, 45) bearing flatly against one another.

14. Tool clamping device according to any one of claims 1 to 13, **characterised in that** the adjusting bolt (13) and the setting element (14) each include in the interior a continuous channel (46, 47) for conducting through coolant and/or lubricant and are sealed relative to one another.

## Revendications

1. Dispositif de serrage d'outils, dévolu à un porte-outils (11) muni d'un fût central de réglage (13) pouvant être animé de coulissements axiaux au moyen d'un système de commande, en vue de régler un outil logé dans ledit porte-outils (11), comportant un coulisseau axial de traction (15) conçu pour actionner des organes individuels de serrage (16), à l'intérieur d'un logement (17) de porte-outils d'une broche (18), sachant que ledit coulisseau de traction (15) renferme un système d'accouplement (20) au moyen duquel le fût de réglage (13) peut être accouplé audit système de commande et désaccouplé d'avec ce dernier, avec absence de jeu axial, et sachant que ledit système d'accouplement (20) présente des éléments individuels de serrage (21) revêtant sensiblement la forme de doigts et espacés, les uns des autres, de distances sensiblement identiques dans la direction périphérique,
**caractérisé par le fait**
**que** les éléments de serrage (21) sont retenus par une extrémité (22), avec mobilité pivotante dans le sens radial, sur un élément de manoeuvre (14) apte à coulisser axialement à l'intérieur du coulisseau de traction (15), et viennent en prise, par des surfaces de serrage (24) sensiblement tronconiques, avec une surface tronconique associée (25) du fût de réglage (13), en provoquant un blocage axial conjoint dudit fût de réglage (13) et dudit élément de manoeuvre (14), suite à un coulissement axial relatif entre ledit coulisseau de traction (15) et ledit élément de manoeuvre (14) concurremment audit fût de réglage (13), et lors d'un actionnement par pivotement de l'extérieur vers l'intérieur, jusqu'à une position accouplée.

2. Dispositif de serrage d'outils, selon la revendication 1,
**caractérisé par le fait**
**que** la surface tronconique (25) du fût de réglage (13), et les surfaces de serrage (24) sensiblement tronconiques des éléments de serrage (21), s'amenuisent dans la direction axiale orientée à l'opposé de l'élément de manoeuvre (14).

3. Dispositif de serrage d'outils, selon la revendication 1 ou 2,
**caractérisé par le fait**
**que** les éléments de serrage (21) peuvent venir s'appliquer contre des surfaces intérieures de commande (27, 28, 29) du coulisseau de traction (15), de l'intérieur vers l'extérieur dans le sens radial, par les extrémités axiales (26) pointant à l'opposé de l'élément de manoeuvre (14), et peuvent pivoter radialement vers l'intérieur, jusqu'à la position accouplée, suite à un coulissement axial relatif entre le coulisseau de traction (15) et ledit élément de manoeuvre (14) concurremment audit fût de réglage (13).

4. Dispositif de serrage d'outils, selon l'une des revendications 1 à 3, **caractérisé par le fait**
**que** les éléments de serrage (21) comprennent un premier tronçon longitudinal axial (30), s'étendant entre la zone de montage pivotant des extrémités (22) et les surfaces de serrage (24) sensiblement tronconiques, et un second tronçon longitudinal axial (31) qui est situé axialement dans la continuité et qui s'étend, dans le sens axial, entre lesdites surfaces de serrage (24), sensiblement tronconiques, et l'extrémité (26) coopérant avec les surfaces de commande (27, 28, 29) du coulisseau de traction (15).

5. Dispositif de serrage d'outils, selon la revendication 4,
**caractérisé par le fait**
**que** le second tronçon longitudinal (31) présente un dimensionnement en longueur au moins égal, pour l'essentiel, à celui du premier tronçon longitudinal (30) ; et, de préférence, par le fait que les éléments de serrage (21) sont doués, sur ledit second tronçon longitudinal (31), d'une plus grande élasticité que sur ledit premier tronçon longitudinal (30).

6. Dispositif de serrage d'outils, selon la revendication 4 ou 5,
**caractérisé par le fait**
**que** chaque élément de serrage (21) est scindé en deux languettes individuelles sensiblement parallèles, dans la région du second tronçon longitudinal (31), au moyen d'une fente axiale (32).

7. Dispositif de serrage d'outils, selon l'une des revendications 1 à 6,
**caractérisé par le fait**
**que** les éléments de serrage (21) sont logés, par l'une (22) de leurs extrémités, dans une rainure annulaire (33) de l'élément de manoeuvre (14) et prennent axialement appui dans cette région, par une surface annulaire (34), contre un flanc (35) de ladite rainure annulaire (33) ; par le fait que, de préférence, lesdits éléments de serrage (21) sont ceinturés par une bague (36) déployable élastiquement, à leur extrémité (22), et sont maintenus solidaires dans ladite rainure annulaire (33) ; et, de préférence, par le fait que lesdits éléments de serrage (21) et ledit élément de manoeuvre (14) sont ceinturés extérieurement par le coulisseau de traction (15).

8. Dispositif de serrage d'outils, selon l'une des revendications 1 à 7, **caractérisé par le fait**
**que** l'angle d'inclinaison α des surfaces de serrage (24) sensiblement tronconiques des éléments de serrage (21), et de la surface tronconique associée (25) du fût de réglage (13),
mesure environ 25°.

9. Dispositif de serrage d'outils, selon l'une des revendications 1 à 8,
**caractérisé par le fait**
**que** les surfaces de serrage (24) sensiblement tronconiques des éléments de serrage (21) fusionnent dans une surface rectiligne intérieure (38) par l'intermédiaire d'un renfoncement annulaire (37) adjacent.

10. Dispositif de serrage d'outils, selon l'une des revendications 1 à 9,
**caractérisé par le fait**
**que** les éléments de serrage (21) comportent une surface cylindrique extérieure (39) à l'extrémité (26) pointant à l'opposé de l'élément de manoeuvre (14) ; par le fait que, de préférence, lesdits éléments de serrage (21) comportent une surface tronconique extérieure (40) antérieure, à ladite extrémité (26) pointant à l'opposé dudit élément de manoeuvre (14) ; et, de préférence, par le fait que ladite surface tronconique (40) se rattache axialement à ladite surface cylindrique (39).

11. Dispositif de serrage d'outils, selon l'une des revendications 3 à 10,
**caractérisé par le fait**
**que** les surfaces intérieures de commande du coulisseau de traction (15) présentent une surface tronconique (28) qui s'amenuise dans la direction orientée à l'opposé de l'élément de manoeuvre (14), et le long de laquelle au cours du transfert à la position accouplée, suite à un coulissement axial relatif entre ledit coulisseau de traction (15) et ledit élément de manoeuvre (14) concurremment au fût de réglage (13), les éléments de serrage (21) peuvent coulisser par leurs extrémités libres (26), en particulier par la surface tronconique antérieure (40) de ces dernières, et peuvent pivoter jusqu'à ladite position accouplée ; et, de préférence, par le fait que l'angle d'inclinaison β de ladite surface tronconique (28) dudit coulisseau de traction (15) mesure environ 30°.

12. Dispositif de serrage d'outils, selon la revendication 11,
**caractérisé par le fait**
**que** la surface tronconique (28) fusionne axialement en direction de l'élément de manoeuvre (14), par l'intermédiaire d'une surface cylindrique (27) attenante, dans une surface de transition (41) dotée, par exemple, d'une légère configuration tronconique et fusionnant dans une surface cylindrique extrême (42) dont le diamètre intérieur correspond sensiblement au diamètre extérieur dudit élément de manoeuvre (14, 43) ; par le fait que, de préférence, les surfaces intérieures de commande du coulisseau de traction (15) sont pourvues d'une surface cylindrique intérieure (29) de longueur axiale conséquente, qui se rattache axialement à la surface tronconique (28) dudit coulisseau de traction (15) dans une direction orientée à l'opposé dudit élément de manoeuvre (14), et forme une surface de glissement et de guidage affectée aux éléments de serrage (21) dans la région de leur extrémité libre (26), notamment de la surface cylindrique extérieure (39), et/ou affectée audit élément de manoeuvre (14), notamment à une bague (43) faisant radialement saillie sur ce dernier ; et, de préférence, par le fait que le diamètre intérieur de ladite surface cylindrique intérieure (29) dudit coulisseau de traction (15) correspond à celui de ladite surface cylindrique extrême (42).

13. Dispositif de serrage d'outils, selon l'une des revendications 1 à 12,
**caractérisé par le fait**
**que** le fût de réglage (13) et l'élément de manoeuvre (14) sont respectivement munis de faces frontales (44, 45) à surface plane, mutuellement en applique.

14. Dispositif de serrage d'outils, selon l'une des revendications 1 à 13,
**caractérisé par le fait**
**que** le fût de réglage (13) et l'élément de manoeuvre (14) sont intérieurement parcourus par un canal ininterrompu (46, 47) respectif, dévolu au passage d'un agent de refroidissement et/ou de lubrification, et sont rendus étanches l'un par rapport à l'autre.
